# FASCICULE DE BREVET EUROPEEN

(11) **EP 0 582 512 B1**
(45) Date de publication et mention de la délivrance du brevet: **19.03.1997**
(21) Numéro de dépôt: 93401986.0
(22) Date de dépôt: 30.07.1993
(51) Int. Cl.: G01D 7/00, G01P 21/02

(54) **Dispositif pour afficher une valeur d'un paramètre**
Vorrichtung zur Anzeige eines Parameterwertes
Device for displaying a parameter value

(30) Priorité: 05.08.1992 FR 9209696
(43) Date de publication de la demande: 09.02.1994
(73) Titulaire: FAIVELEY TRANSPORT, 93200 Saint-Denis (FR)
(72) Inventeur: Chocat, Marc, F-37000 Tours (FR); Dalmas, Gilles, F-75012 Paris (FR)
(74) Mandataire: Keib, Gérard

(56) Documents cités:
- FR-A- 1 573 346
- US-A- 4 688 029
- US-A- 4 739 319
- DESIGN ENGINEERING, avril 1983, London GB, pages 39-44; T. WEARDEN : 'Bargraphs and mimic diagrams aid digital plant operation'

## Description

La présente invention vise un dispositif pour afficher une valeur d'un paramètre sur la base de deux signaux de commande d'affichage ou plus.

On connaît déjà des dispositifs de ce genre par exemple pour afficher la vitesse d'un véhicule, notamment ferroviaire. Sur certains trains, l'affichage de la vitesse est ainsi assuré par un dispositif à bande défilante. Les mesures effectuées par deux capteurs de vitesse indépendants sont transmises à une centrale tachymétrique. Après traitement, cette centrale délivre deux signaux de commande d'affichage correspondant à la vitesse réelle du train. Un des deux signaux de commande d'affichage est fourni au moteur commandant le défilement de la bande dont la position indique la valeur du signal. Le second signal est affecté à un comparateur qui reçoit par ailleurs le signal de sortie d'un détecteur mesurant la position de la bande. Si la comparaison révèle un écart sensible, un indicateur mécanique tel qu'un drapeau vient se placer devant la bande défilante pour signaler au conducteur que la situation est anormale.

Ce type d'affichage basé sur deux mesures indépendantes est conçu à des fins de sécurité. Le conducteur du train est informé dès qu'une contradiction apparaît entre les deux signaux de commande d'affichage. Toutefois, des moyens de contrôle (comparateur et détecteur de position de la bande) sont dédiés à cette fonction de sécurité. En cas de défaillance de l'indicateur mécanique, le conducteur ne peut plus être informé d'une anomalie dans les mesures.

En outre, l'indicateur mécanique ne renseigne pas sur la nature de l'anomalie, de sorte que la réparation nécessite une phase préalable de diagnostic d'anomalie.

Le dispositif connu à bande défilante a encore l'inconvénient d'impliquer un certain nombre de pièces mobiles (bobines, moteur, mécanisme de l'indicateur de défaut) qui sont sujettes à l'usure mécanique. Cet inconvénient est particulièrement sensible lorsque le dispositif équipe des trains de banlieue dont la vitesse n'est que rarement stabilisée entre phases d'accélération et de freinage, car les pièces mobiles sont sollicitées presque en permanence.

Le but de la présente invention est donc de proposer un dispositif pour afficher une valeur d'un paramètre qui indique la présence d'une anomalie sans qu'une pièce ou une partie du dispositif soit spécialement réservée à cette fonction et qui facilite également la détermination de la nature de l'anomalie.

Selon l'invention, le dispositif comprend un ensemble d'éléments de visualisation disposés dans une zone d'affichage et ayant chacun plusieurs états pouvant être sélectionnés en fonction d'un des signaux de commande d'affichage de manière à afficher la valeur du paramètre sous la forme d'un motif constitué par des éléments de visualisation ayant un même état sélectionné, et l'ensemble d'éléments de visualisation inclut au moins deux sous-ensembles spatialement imbriqués dans la zone d'affichage et respectivement associés aux signaux de commande d'affichage, l'état de chaque élément de visualisation d'un sous-ensemble étant sélectionné en fonction du signal de commande d'affichage associé à ce sous-ensemble tandis que chaque sous-ensemble d'éléments de visualisation est associé à des moyens d'activation respectifs, les moyens d'activation commandant sélectivement l'état de chaque élément de visualisation du sous-ensemble en fonction du signal de commande d'affichage associé.

Avec un tel dispositif, le conducteur lisant la valeur affichée peut aisément déterminer si une anomalie touche les signaux de commande reçus par le dispositif. En effet, les sous-ensembles de visualisation étant imbriqués dans la zone d'affichage, le motif est affiché de façon anormale. De la sorte, une anomalie dans les signaux de commande d'affichage est visualisée intrinsèquement par le dispositif selon l'invention. Par exemple, si les valeurs transmises par les signaux sont discordantes, chaque valeur est normalement affichée par le sous-ensemble d'éléments de visualisation qui lui correspond. A cause de l'imbrication des sous-ensembles d'éléments de visualisation, certaines parties du motif sont incomplètes. Le conducteur constate donc la présence d'une anomalie alors que le dispositif ne comporte aucune pièce dont le rôle soit spécifiquement de signaler une anomalie.

L'observateur sait de la même façon si une anomalie touche les moyens d'activation d'un des sous-ensembles. Par exemple, si les moyens d'activation d'un des sous-ensembles sont hors-service, tous les éléments de visualisation du sous-ensemble en question apparaîtront activés ou désactivés, et du fait de l'imbrication des éléments de visualisation, l'affichage du motif sera manifestement très incomplet.

Selon une forme de réalisation du dispositif selon l'invention, les moyens d'activation sont reliés à des moyens de décodage des signaux de commande d'affichage, ces moyens de décodage étant agencés pour détecter des états des signaux de commande d'affichage individuels qui sont incompatibles avec l'affichage d'une valeur par le dispositif. Ainsi, le conducteur est prévenu de certaines anomalies touchant l'état des signaux transmis, par exemple si le niveau de bruit d'un des signaux est excessif ou si un des signaux traduit une mesure tombant en dehors de l'intervalle de valeurs pouvant être affichées par le dispositif.

Les éléments de visualisation sont de préférence des éléments électro-optiques, par exemple constitués par des parties élémentaires d'un afficheur à cristaux liquides activées indépendamment les unes des autres. Cette réalisation élimine les pièces mécaniques mobiles qui limitent la durabilité des dispositifs antérieurs à bande défilante.

D'autres particularités et avantages de l'invention apparaîtront encore dans la description ci-après d'une forme de réalisation préférée de l'invention, donnée à titre d'exemple non limitatif.

Aux dessins annexés :
- la figure 1 représente schématiquement une motrice ferroviaire munie du dispositif selon l'invention ;
- la figure 2 est un schéma synoptique des éléments du dispositif suivant l'invention, repéré par 3 sur la figure 1 ; et
- les figures 3 à 17 présentent différents types d'affichage par le dispositif de la figure 2.

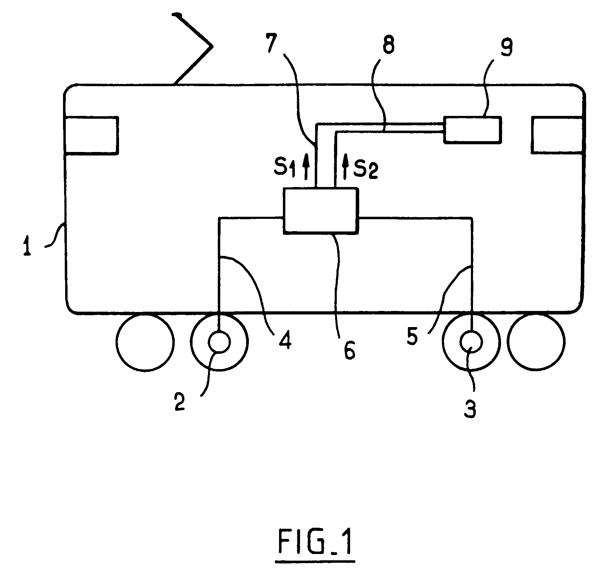

Le dispositif selon l'invention peut être utilisé sur la motrice 1 d'un train de chemin de fer, comme le montre la figure 1, pour indiquer au conducteur la vitesse réelle instantanée du train.

Deux capteurs de vitesse 2, 3 sont montés sur des essieux différents de la motrice 1. Chaque capteur 2, 3 délivre un signal électrique représentant le résultat de la mesure de vitesse effectuée. Les signaux sont transmis, via les connexions respectives 4 et 5, à une centrale tachymétrique 6 électronique munie d'un algorithme de calcul et fournissant de façon connue deux signaux de commande d'affichage S1, S2 de la vitesse mesurée à partir du traitement des deux signaux transmis par les capteurs 2 et 3. Les signaux de commande d'affichage S1, S2 sont des signaux électriques périodiques dont la fréquence représente une mesure de la vitesse réelle instantanée du train suivant une progression linéaire à partir d'une fréquence de base, par exemple de 80 Hz, correspondant à une vitesse nulle.

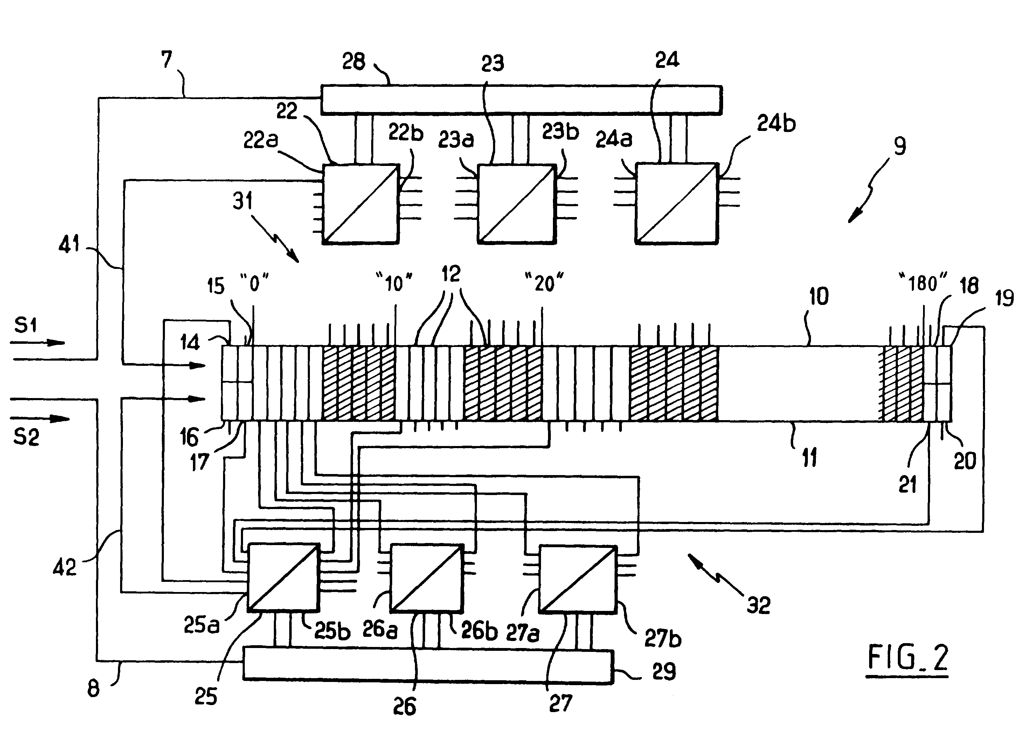

Les deux signaux de commande d'affichage S1, S2 sont transmis, via les lignes respectives 7 et 8, au dispositif suivant l'invention 9, représenté en détail sur la figure 2.

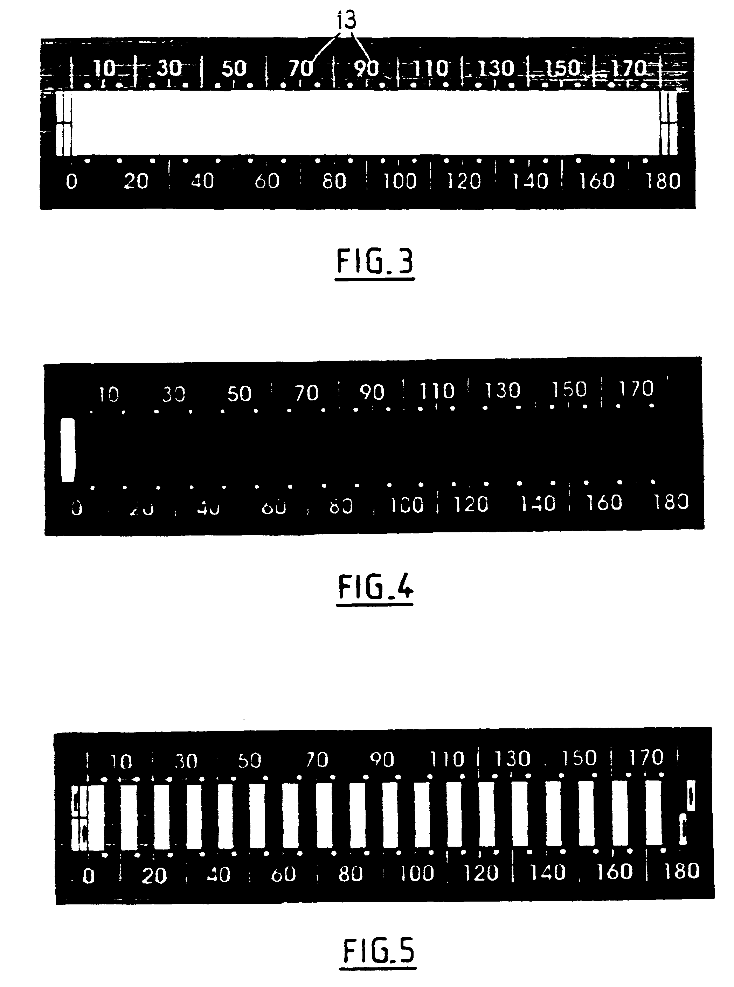

Le dispositif comprend un afficheur à cristaux liquides ayant une zone d'affichage 10 de forme rectangulaire allongée, appelée diagramme à barres ou bargraph. Cet afficheur est constitué en partie frontale d'une plaque de verre 11, visible sur la figure 2, recouverte d'électrodes conductrices. Ces électrodes identiques et de forme rectangulaire, définissent un ensemble d'éléments électro-optiques de visualisation 12 ou barres du diagramme à barres 10. Les éléments 12 sont disposés côte à côte suivant leurs grands côtés et sont disposés suivant une ligne. La largeur de ces éléments a été exagérée sur la figure 2 pour faciliter sa lecture. Les éléments 12, au nombre de 180 dans l'exemple illustré ici, représentent chacun un intervalle, par exemple d'un kilomètre/heure, de la vitesse à afficher. Ils sont repérés par une graduation 13 visible sur la figure 3. En outre, les extrémités.de la zone d'affichage 10 sont munies de bornes d'extrémités 14, 15, 16, 17 et 18, 19, 20, 21 également matérialisées par des électrodes conductrices déposées sur la plaque de verre 11. Chaque borne d'extrémité se compose de quatre éléments de visualisation de défaut 14, 15, 16, 17 et 18, 19, 20, 21 disposés en rectangle, la longueur de ce rectangle étant égale à la longueur d'un élément de visualisation 12. En arrière de la plaque de verre 11 est disposée la couche de cristaux liquides proprement dite, et une seconde plaque de verre, de forme identique à celle de la plaque de verre 11, et recouverte d'une couche conductrice, appelée backplane, définissant des électrodes de référence commune pour certaines parties de l'afficheur.

Lorsqu'une différence de potentiel est appliquée entre l'électrode d'un élément de visualisation 12 et l'électrode de référence correspondante, le cristal liquide intercalaire se polarise et devient opaque à la lumière. En l'absence de différence de potentiel, le cristal liquide est transparent à la lumière. L'afficheur à cristaux liquides fonctionne en mode "transflectif" : la plaque arrière et sa couche conductrice constituent un miroir sans tain qui réfléchit la lumière provenant de la face frontale de l'afficheur et qui laisse passer la lumière issue d'une source lumineuse située à l'arrière de l'afficheur. Ainsi l'état opaque d'un élément 12 correspond à un état d'affichage sombre, et l'état transparent correspond à un état d'affichage lumineux (figures 3 à 17).

Le dispositif d'affichage selon l'invention comporte en outre deux processeurs 28, 29 qui sont respectivement reliés aux lignes 7, 8 pour recevoir chacun un des signaux de commande d'affichage S1, S2, et deux séries de circuits d'activation 22, 23, 24 et 25, 26, 27. Les circuits d'activation 22, 23, 24 sont reliés au processeur 28 traitant le signal S1 et sont agencés pour commander sélectivement l'état de certains éléments 12 de la zone d'affichage 10 appartenant à un premier sous-ensemble d'éléments de visualisation 31 (représenté hachuré à la figure 2). Les circuits d'activation 25, 26, 27 sont reliés au processeur 29 traitant le signal S2 et sont agencés pour commander sélectivement l'état d'autres éléments 12 de la zone d'affichage 10 appartenant à un second sous-ensemble d'éléments de visualisation 32 (représenté non hachuré à la figure 2).

Comme le montre la figure 2, les deux sous-ensembles 31, 32 sont imbriqués spatialement dans la zone d'affichage 10. Plus précisément, les éléments de visualisation 12 sont répartis entre les sous-ensembles 31 et 32 par groupes de cinq éléments adjacents, les groupes étant disposés en alternance le long de la direction d'alignement des éléments 12. Ainsi sur la figure 2, mis à part les bornes d'extrémités 14, 15, 16, 17 et 18, 19, 20, 21 les cinq premiers éléments à partir de la gauche du diagramme 10 appartiennent au sous-ensemble 31, les cinq suivant au sous-ensemble 32, les cinq suivant au sous ensemble 31, et ainsi de suite.

En outre, la couche conductrice déposée sur la plaque de verre située à l'arrière de l'afficheur est divisée en deux parties électriquement isolées l'une de l'autre, dont l'imbrication spatiale correspond à celle des sous-ensembles 31, 32. Cette couche définit ainsi une électrode de référence commune pour chaque sous-ensemble 31, 32.

On va maintenant décrire les montages électriques relatifs aux sous-ensembles 31 et 32, en référence à la figure 2 qui, pour faciliter sa lecture, présente seulement certaines connexions relatives au sous-ensemble 32.

Chaque circuit d'activation 22, 23, 24, 25, 26, 27 se compose de deux modules 22a et 22b, 23a et 23b, 24a et 24b, 25a et 25b, 26a et 26b, 27a et 27b pouvant délivrer chacun quarante signaux de commande indépendants. Chacun de ces signaux de commande est un signal de tension carré d'amplitude 0 ou 5V et de fréquence constante. Une sortie du module 22a est reliée par une ligne 41 à l'électrode de référence du sous-ensemble 31 pour lui adresser un tel signal carré, qui sera un signal de référence commune pour le sous-ensemble 31. De même, une sortie du module 25a est reliée par une ligne 42 à l'électrode de référence du sous-ensemble 32 pour lui adresser un signal carré, qui sera un signal de référence commun pour le sous-ensemble 32. Chacune des bornes d'extrémité de l'afficheur comporte deux éléments de visualisation de défaut 15 et 16, 18 et 20 associés au sous-ensemble 31 et disposés selon une diagonale du rectangle limitant cette borne. L'état de ces éléments 15, 16, 18, 20 est commandé par quatre sorties respectives du module 22a. Les deux autres éléments de visualisation de défaut 14 et 17, 19 et 21 de chaque borne d'extrémité de l'afficheur, disposés selon l'autre diagonale du rectangle limitant cette borne, sont associés au sous-ensemble 32. L'état de ces éléments 14, 17, 19, 21 est commandé par quatre sorties respectives du module 25a. Chaque groupe de cinq éléments adjacents appartenant au sous-ensemble 31 comporte un premier élément dont l'état est commandé par une sortie respective du module 22b, un second élément dont l'état est commandé par une sortie respective du module 23a, un troisième élément dont l'état est commandé par une sortie respective du module 24a, un quatrième élément dont l'état est commandé par une sortie respective du module 23b et un cinquième élément dont l'état est commandé par une sortie respective du module 24b. Chaque groupe de cinq éléments adjacents appartenant au sous-ensemble 32 comporte un premier élément dont l'état est commandé par une sortie respective du module 25b, un second élément dont l'état est commandé par une sortie respective du module 26a, un troisième élément dont l'état est commandé par une sortie respective du module 27a, un quatrième élément dont l'état est commandé par une sortie respective du module 26b et un cinquième élément dont l'état est commandé par une sortie respective du module 27b. Pour activer un élément particulier, c'est-à-dire pour lui appliquer une différence de potentiel et le rendre opaque donc sombre, le module correspondant adresse à l'électrode de cet élément un signal carré en opposition de phase avec le signal de référence relatif au sous-ensemble auquel appartient cet élément. Inversement, la désactivation (transparence) de l'élément correspond à un signal carré en phase (absence de différence de potentiel).

Chaque module 22a, 22b, 23a, 23b, 24a, 24b ou 25a, 25b, 26a, 26b, 27a, 27b commande la phase de ses signaux de sortie en fonction d'un mot de quarante bits reçu en série depuis le processeur 28 ou 29 associé au sous-ensemble 31 ou 32. Ces mots de quarante bits résultent du traitement par le processeur 28 ou 29 du signal de commande d'affichage S1 ou S2 associé au sous-ensemble 31 ou 32. Les éléments 12 du sous-ensemble 31 ou 32 correspondant à des graduations 13 inférieures ou égales à la vitesse indiquée par le signal S1 ou S2 sont normalement désactivés (aspect lumineux) tandis que ceux correspondant à des graduations 13 supérieures à la vitesse indiquée par le signal S1 ou S2 sont normalement activés (aspect sombre). La valeur de la vitesse s'affiche ainsi sous la forme d'un motif constitué par les éléments de visualisation lumineux (désactivés) des deux sous-ensembles.

Les éléments de visualisation de défaut 14, 15, 16, 17 de la borne d'extrémité gauche sont normalement désactivés (lumineux) lorsque le dispositif est en service, et ceux 18, 19, 20, 21 de la borne d'extrémité droite sont normalement activés (sombres). Lorsqu'un processeur 28 ou 29 détecte que le signal de commande d'affichage S1 ou S2 qu'il reçoit est dans un état incompatible avec l'affichage d'une valeur par le dispositif, il commande le module 22a ou 25a correspondant pour faire clignoter les éléments de visualisation de défaut 15, 16, 18, 20 ou 14, 17, 19, 21 associés à ce signal S1 ou S2. Cet état d'alerte des éléments de visualisation de défaut est notamment commandé lorsque le signal S1 ou S2 traduit une vitesse qui serait inférieure à 0 (fréquence inférieure à la fréquence de base de 80 Hz), lorsque le signal S1 ou S2 est à une fréquence nulle (fil coupé ou court-circuit) ou lorsque le signal S1 ou S2 n'est pas exploitable car excessivement bruité. En outre, lorsque le signal S1 ou S2 traduit une vitesse supérieure à la valeur de pleine échelle du dispositif (180 km/h), le processeur correspondant 28 ou 29 fait clignoter les éléments de visualisation de défaut 18, 20 ou 19, 21 correspondants de la borne d'extrémité droite.

Lorsque le dispositif est hors tension, il se présente comme sur la figure 3, tous les éléments de visualisation, y compris ceux des bornes d'extrémités étant désactivés et transparents.

Lorsque le dispositif est mis sous tension à vitesse nulle, tous les éléments de visualisation 12 sont mis à l'état opaque ainsi que les éléments de visualisation de défaut 18, 19, 20, 21 de la borne d'extrémité droite, comme le montre la figure 4. Les signaux de commande d'affichage S1, S2 transmis par les lignes 7 et 8 ont une fréquence de 80 Hz correspondant à une vitesse nulle de la motrice. L'état transparent des éléments de visualisation 14, 15, 16 et 17 de la borne d'extrémité gauche témoigne de la mise sous tension du dispositif.

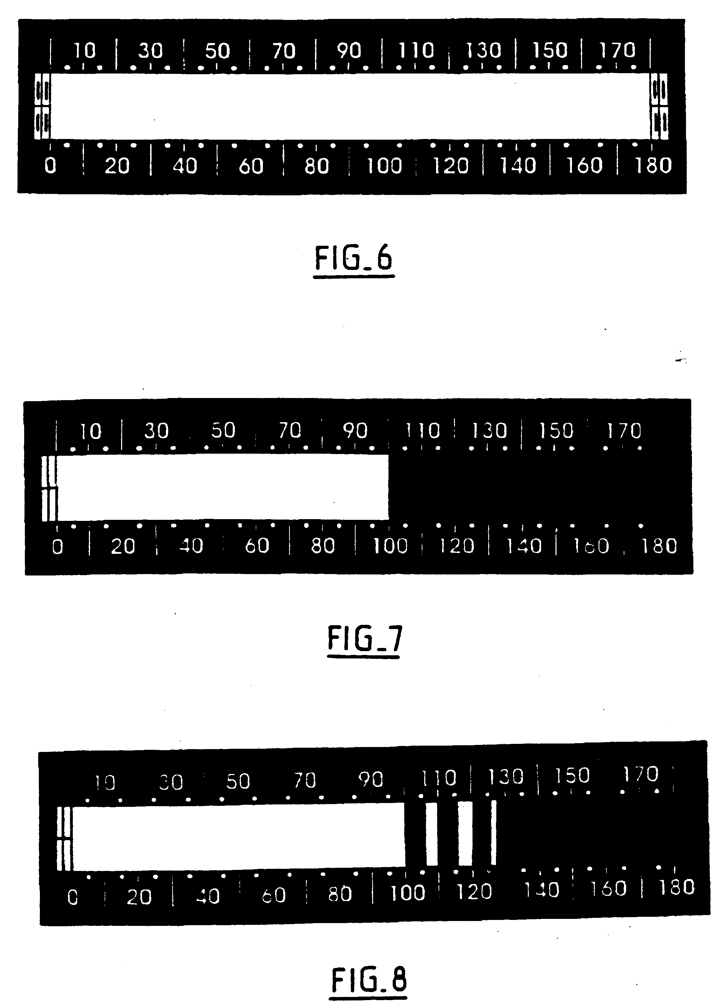

A vitesse nulle, lorsque le signal transmis par la ligne 8 est défaillant, par exemple si la ligne 8 est coupée, cette anomalie apparaît naturellement sur la zone d'affichage, comme le montre la figure 5. Tous les éléments appartenant au sous-ensemble 32 associé à la ligne 8 sont désactivés et donc rendus transparents et les éléments de visualisation de défaut correspondants 14, 17, 19 et 21 clignotent. La figure 6 présente le cas où les deux signaux S1, S2 transmis par les lignes 7 et 8 sont défaillants : tous les éléments 12 sont transparents et tous les éléments de visualisation de défaut 14 à 21 clignotent.

Lorsque la motrice roule à 100 km/h, la sélection des états des éléments de chaque sous-ensemble situé entre les graduations 0 et 100 conduit à la situation de la figure 7. Les éléments 12 rendus transparents constituent un motif qui est ici un rectangle dont l'extension vers la droite est proportionnelle à la vitesse, permettant une lecture instantanée de la vitesse par le conducteur.

La figure 8 illustre le cas où les signaux de commande d'affichage S1, S2 sont discordants, par exemple S1 correspondant à 128 km/h et S2 correspondant à 100 km/h. Le motif habituel, le rectangle, est affiché de façon anormale et incomplète car chaque microprocesseur 28 et 29 commande l'activation des éléments du sous-ensemble associé conformément au signal de commande d'affichage qu'il reçoit en propre.

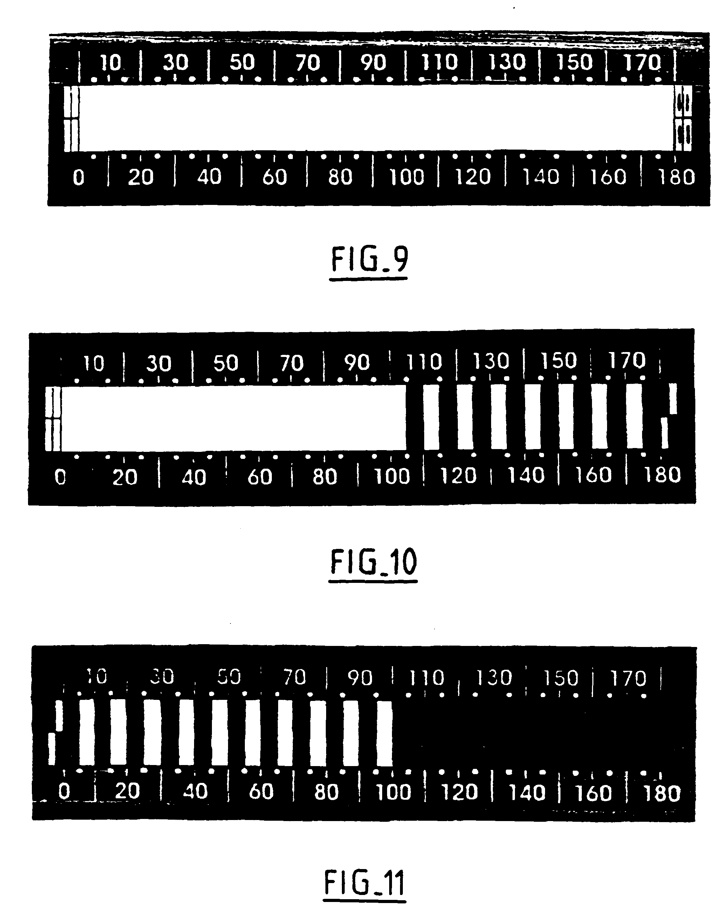

Lorsque chaque signal de commande d'affichage indique une vitesse supérieure à 180 km/h, la zone d'affichage 10 se présente logiquement comme sur la figure 9, les éléments de visualisation de défaut 14, 15, 16, 17 situés à l'extrémité gauche et les éléments de visualisation 12 sont transparents et les éléments de visualisation de défaut 18, 19, 20, 21 situés à l'extrémité droite clignotent, indiquant ainsi que la vitesse est excessive.

La figure 10 présente le cas où, à une vitesse de 100 km/h, tous les éléments 12 d'un sous-ensemble, ici le sous-ensemble 31, sont désactivés par exemple en cas de panne du microprocesseur 28 ou de la série de circuits d'activation 22, 23, 24 lui correspondant. Le conducteur peut encore lire la vitesse de 100 km/h indiquée par les éléments de l'autre sous-ensemble 32 et est prévenu de l'anomalie par l'alternance de groupes d'éléments opaques et transparents au-delà de la graduation 100.

La figure 11 présente le cas contraire, celui où les éléments du sous-ensemble 32 sont tous activés et opaques bien que la motrice roule à 100 km/h comme l'indiquent les éléments de l'autre sous-ensemble 31. Cette fois, c'est donc le rectangle situé entre les graduations 0 et 100 qui apparaît lui-même incomplet. Cette situation peut correspondre à un autre type de défaillance du processeur 29 ou de la série de circuits d'activation 25, 26, 27.

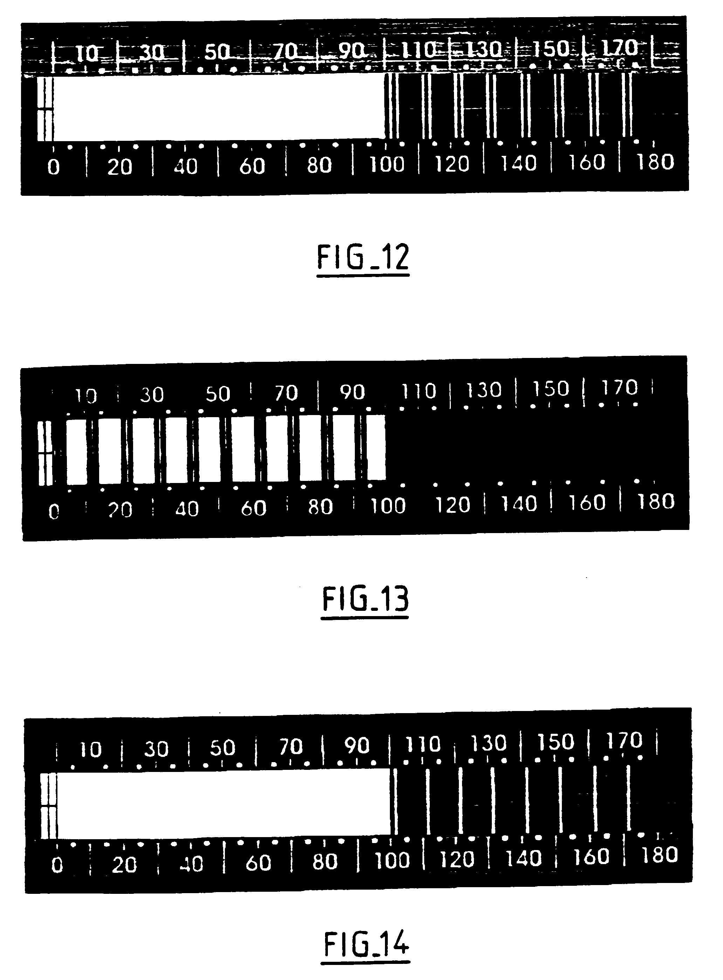

La figure 12 correspond au cas où, à 100 km/h, tous les éléments associés à un circuit d'activation, ici le circuit d'activation 26, sont désactivés, en raison d'une défaillance de ce circuit. Les deuxième et quatrième éléments de chaque groupe du sous-ensemble 32 apparaissent donc transparents, indiquant de ce fait au conducteur la nature de l'anomalie touchant le dispositif.

A l'inverse, toujours à 100 km/h, la figure 13 correspond au cas d'une activation erronée de tous les éléments du même circuit d'activation 26, ce qui correspond à un autre type de défaillance de ce circuit.

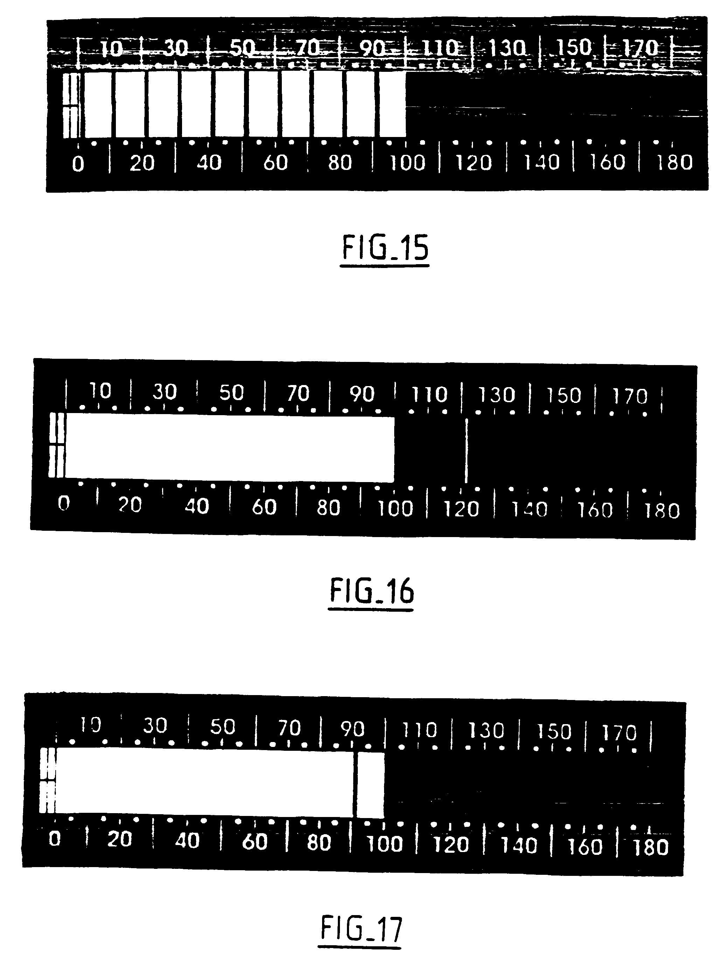

Les figures 14 et 15 représentent des situations respectivement analogues aux figures 12 et 13 à ceci près que seule la commande relative à un module 26a du circuit d'activation 26 est erronée. Sur la figure 14, tous les éléments du module 26a sont désactivés à cause d'une défaillance de ce module. Sur la figure 15, les éléments commandés par le module 26a sont activés à cause d'un autre type de défaillance de ce module.

La figure 16 montre, à 100 km/h, le cas où un élément de visualisation, ici le 122e élément, reste constamment transparent, à cause d'une sortie systématiquement erronée du module 26a ou d'une rupture de ligne entre cette sortie et l'électrode de cet élément.

Enfin, la figure 17 montre le cas où un élément, ici le 91e élément, relié au module 25b, est constamment activé, rendant incomplet l'affichage du motif indiquant la vitesse de 100 km/h à cause d'une sortie erronée du module 25b.

On constate que la description de l'aspect de la zone d'affichage 10 suivant les différents cas d'anomalie rend particulièrement claire l'organisation des différents éléments participant à l'affichage du motif. Cela montre que le dispositif permet de détecter non seulement la présence d'une anomalie mais également le plus souvent la nature ou le type de l'anomalie en question.

Le fait de réunir les éléments 12 par groupes alternés ayant chacun le même nombre d'éléments (cinq dans l'exemple décrit) confère au dispositif deux types de résolution : une résolution fine élément par élément permettant un affichage de la vitesse ayant un aspect pratiquement continu lorsque la vitesse varie, et une résolution plus grossière groupe par groupe permettant une visualisation non ambigüe d'une éventuelle discordance entre les signaux S1 et S2. Chaque groupe comprend des éléments de visualisation adjacents dont les états respectifs sont commandés par des circuits d'activation différents 22, 23, 24 ou 25, 26, 27 de sorte qu'une défaillance d'un circuit d'activation particulier donne lieu à un affichage correspondant (figures 12 à 15) permettant une identification immédiate de la nature du défaut.

En outre, dans certains cas, la détection d'une anomalie n'empêche pas de continuer à lire la vitesse de la motrice affichée sur le dispositif.

Bien qu'on ait décrit l'invention en référence à des exemples de réalisation spécifiques, on comprendra que de nombreuses modifications peuvent leur être apportées sans sortir du cadre de la présente invention.

Ainsi, la répartition des éléments entre les sous-ensembles pourra être largement modifiée. Plus généralement, la zone d'affichage et le motif pourront être conçus de façon très différente. Ils pourraient par exemple être circulaires.

On peut également adapter le dispositif au cas où il y a plus de deux signaux de commande d'affichage en prévoyant un nombre correspondant de sous-ensembles imbriqués d'éléments de visualisation.

En outre l'invention n'est pas limitée au cas où les éléments de visualisation sont du type à cristaux liquides. L'utilisation d'éléments électro-optiques tels que des éléments à cristaux liquides présente néanmoins l'avantage déterminant d'éliminer toute partie mécanique mobile dans le dispositif.

## Revendications

1. Dispositif pour afficher une valeur d'un paramètre, comprenant des moyens (28, 29) pour recevoir au moins deux signaux de commande d'affichage (S1, S2), caractérisé en ce qu'il comprend un ensemble d'éléments de visualisation (12) disposés dans une zone d'affichage (10) et ayant chacun plusieurs états pouvant être sélectionnés en fonction d'un des signaux de commande d'affichage (S1, S2) de manière à afficher la valeur du paramètre sous la forme d'un motif constitué par des éléments de visualisation (12) ayant un même état sélectionné, et en ce que l'ensemble d'éléments de visualisation (12) inclut au moins deux sous-ensembles (31, 32) spatialement imbriqués dans la zone d'affichage (10) et respectivement associés aux signaux de commande d'affichage (S1, S2), l'état de chaque élément de visualisation (12) d'un sous-ensemble (31, 32) étant sélectionné en fonction du signal de commande d'affichage (S1, S2) associé à ce sous-ensemble (31, 32), tandis que chaque sous-ensemble (31, 32) d'éléments de visualisation (12) est associé à des moyens d'activation respectifs (22, 23, 24 et 25, 26, 27), les moyens d'activation commandant sélectivement l'état de chaque élément de visualisation (12) du sous-ensemble (31, 32) en fonction du signal de commande d'affichage associé (S1, S2).

2. Dispositif conforme à la revendication 1, caractérisé en ce que les moyens d'activation (22, 23, 24, 25, 26, 27) sont reliés à des moyens de décodage (28, 29) des signaux de commande d'affichage (S1, S2), ces moyens de décodage (28, 29) étant agencés pour détecter des états des signaux de commande d'affichage individuels (S1, S2) qui sont incompatibles avec l'affichage d'une valeur par le dispositif.

3. Dispositif conforme à la revendication 2, caractérisé en ce que les moyens d'activation (22, 23, 24 et 25, 26, 27) associés à chaque sous-ensemble (31, 32) d'éléments de visualisation (12) sont reliés à des moyens de décodage respectifs (28, 29).

4. Dispositif conforme à l'une des revendications 2 ou 3, caractérisé en ce qu'il comprend au moins un élément de visualisation de défaut (14, 15, 16, 17, 18, 19, 20, 21) disposé dans la zone d'affichage (10) et ayant un état d'alerte sélectionné lorsque les moyens de décodage (28, 29) ont détecté un état incompatible d'un signal de commande d'affichage (S1, S2).

5. Dispositif conforme à la revendication 4, caractérisé en ce qu'il comprend au moins un élément de visualisation de défaut (15, 16, 18, 20 et 14, 17, 19, 21) associé à chaque signal de commande d'affichage (S1, S2), l'état d'alerte de cet élément étant sélectionné par les moyens d'activation associés audit signal de commande d'affichage (S1, S2).

6. Dispositif conforme à l'une des revendications 4 ou 5, caractérisé en ce que les éléments de visualisation (12) sont disposés le long d'une ligne, et en ce qu'il comprend des éléments de visualisation de défaut (14, 15, 16, 17, 18, 19, 20) situés à au moins une extrémité de ladite ligne.

7. Dispositif conforme à l'une des revendications 1 à 6, caractérisé en ce que les éléments de visualisation (12) sont disposés suivant une ligne, et en ce que chaque sous-ensemble (31, 32) d'éléments de visualisation (12) comprend plusieurs groupes d'éléments adjacents, les groupes appartenant aux différents sous-ensembles (31, 32) étant disposés en alternance le long de ladite ligne.

8. Dispositif conforme à la revendication 7, caractérisé en ce que chacun desdits groupes comporte un même nombre d'éléments de visualisation (12).

9. Dispositif conforme à la revendication 8, caractérisé en ce que les moyens d'activation associés à un sous-ensemble (31, 32) comprennent plusieurs circuits d'activation (22, 23, 24 et 25, 26, 27) qui commandent chacun des états d'éléments de visualisation respectifs du sous-ensemble (31, 32), et en ce que chaque groupe d'éléments de visualisation adjacents de ce sous-ensemble (31, 32) comprend au moins deux éléments (12) dont les états respectifs sont commandés par des circuits d'activation différents.

10. Dispositif conforme à la revendication 9, caractérisé en ce que deux éléments adjacents de chacun desdits groupes ont leurs états respectifs commandés par deux circuits d'activation différents.

11. Dispositif conforme à l'une des revendications 1 à 10, caractérisé en ce que les éléments de visualisation (12) sont des éléments électro-optiques.

12. Dispositif conforme à la revendication 11, caractérisé en ce que les éléments électro-optiques sont constitués par des parties élémentaires (12) d'un afficheur à cristaux liquides activées indépendamment les unes des autres.

13. Dispositif conforme à l'une des revendications 1 à 12, caractérisé en ce que ledit paramètre représente la vitesse d'un véhicule (1), notamment ferroviaire.

## Patentansprüche

1. Vorrichtung zur Anzeige eines Parameterwerts, mit Mitteln (28, 29) zum Empfang von mindestens zwei Anzeigesteuersignalen (S1, S2), dadurch gekennzeichnet, daß sie eine Gruppe von Display-Elementen (12) umfaßt, die in einem Anzeigebereich (10) angeordnet sind und je mehrere Zustände haben, die in Abhängigkeit von dem einen Anzeigesteuersignal (S1, S2) derart ausgewählt sind daß der Parameterwert in Form eines Musters angezeigt ist, das durch Display-Elementen (12) gebildet ist, die einen selben ausgewählten Zustand haben, und daß die Gruppe von Display-Elementen (12) mindestens zwei Untergruppen (31, 32) beinhaltet, die räumlich in dem Anzeigebereich (10) überlappt sind und jeweils den Anzeigesteuersignalen (S1, S2) zugeordnet sind, wobei der Zustand jedes Display-Elementes (12) aus einer Untergruppe (31, 32) in Abhängigkeit von dem dieser Untergruppe (31, 32) zugeordneten Anzeigesteuersignal (S1, S2) ausgewählt ist, während jede Untergruppe (31, 32) von den Display-Elementen (12) jeweiligen Aktivierungsmitteln (22, 23, 24 und 25, 26, 27) zugeordnet ist, wobei die Aktivierungsmittel den Zustand jedes Display-Elementes (12) aus der Untergruppe (31, 32) in Abhängigkeit von dem zugehörigen Anzeigesteuersignal (S1, S2) selektiv steuern.

2. Vorrichtung nach Anspruch 1, dadurch gekennzeichnet, daß die Aktivierungsmittel (22, 23, 24 und 25, 26, 27) mit den Mitteln (28, 29) zur Dekodierung der Anzeigesteuersignale (S1, S2) verbunden sind, wobei die Dekodierungsmittel (28, 29) derart ausgebildet sind, daß sie Zustände von den einzelnen Anzeigesteuersignalen (S1, S2) erkennen, die mit der Anzeige eines Wertes durch die Vorrichtung nicht kompatibel sind.

3. Vorrichtung nach Anspruch 2, dadurch gekennzeichnet, daß die jeder Untergruppe (31, 32) von Display-Elementen (12) zugeordneten Aktivierungsmittel (22, 23, 24 und 25, 26, 27) mit den jeweiligen Dekodierungsmitteln (28, 29) verbunden sind.

4. Vorrichtung nach einem der Ansprüche 2 oder 3, dadurch gekennzeichnet, daß sie mindestens ein Fehler-Display-Element (14, 15, 16, 17, 18, 19, 20, 21) umfaßt, das in dem Anzeigebereich (10) angeordnet ist und einen ausgewählten Alarmzustand hat, wenn die Dekodierungsmittel (28, 29) einen nicht kompatiblen Zustand eines Anzeigesteuersignals (S1, S2) entdeckt haben.

5. Vorrichtung nach Anspruch 4, dadurch gekennzeichnet, daß sie mindestens ein jedem Anzeigesteuersignal (S1, S2) zugeordnetes Fehler-Display-Element (14, 15, 16, 17, 18, 19, 20, 21) umfaßt, wobei der Alarmzustand dieses Elementes durch die dem besagten Anzeigesteuersignal (S1, S2) zugeordneten Aktivierungsmittel ausgewählt wird.

6. Vorrichtung nach einem der Ansprüche 4 oder 5, dadurch gekennzeichnet, daß die Display-Elemente (12) einer Linie entlang angeordnet sind, und daß sie die Fehler-Display-Elemente (14, 15, 16, 17, 18, 19, 20, 21) umfaßt, die sich mindestens an einem Ende der besagten Linie befinden.

7. Vorrichtung nach einem der Ansprüche 1 bis 6, dadurch gekennzeichnet, daß die Display-Elemente (12) einer Linie nach angeordnet sind, und daß jede Untergruppe (31, 32) von Display-Elementen (12) mehrere Gruppen von angrenzenden Elementen umfaßt, wobei die zu den einzelnen Untergruppen (31, 32) gehörenden Gruppen entlang der besagten Linie abwechselnd angeordnet sind.

8. Vorrichtung nach Anspruch 7, dadurch gekennzeichnet, daß jede der besagten Gruppen die gleiche Anzahl von Display-Elementen (12) aufweist.

9. Vorrichtung nach Anspruch 8, dadurch gekennzeichnet, daß die einer Untergruppe (31, 32) zugeordneten Aktivierungsmittel mehrere Aktivierungsschaltkreise (22, 23, 24 und 25, 26, 27) umfassen, die die einzelnen Zuständen jeder der jeweiligen Display-Elemente der Untergruppe (31, 32) steuern, und daß jede Gruppe von angrenzenden Display-Elementen dieser Untergruppe (31, 32) mindestens zwei Elemente (12) umfaßt, dessen jeweilige Zustände von verschiedenen Aktivierungsschaltkreisen gesteuert werden.

10. Vorrichtung nach Anspruch 9, dadurch gekennzeichnet, daß die jeweiligen Zustände von zwei angrenzenden Elementen aus jeder besagten Gruppe von zwei verschiedenen Aktivierungsschaltkreisen gesteuert werden.

11. Vorrichtung nach einem der Ansprüche 1 bis 10, dadurch gekennzeichnet, daß die Display-Elemente (12) elektrooptische Elemente sind.

12. Vorrichtung nach dem Anspruch 11, dadurch gekennzeichnet, daß die elektrooptischen Elemente von elementaren Teilen (12) einer Flüssigkristallanzeige gebildet sind, die unabhängig voneinander aktiviert sind.

13. Vorrichtung nach einem der Ansprüche 1 bis 12, dadurch gekennzeichnet, daß der besagte Parameter die Geschwindigkeit eines Fahrzeuges (1), insbesondere eines Bahnfahrzeuges, darstellt.

## Claims

1. A device for displaying a parameter value, the device comprising means (28, 29) for receiving at least two display control signals (S1, S2), and being characterized in that it comprises a set of display elements (12) disposed in a display zone (10) and each having a plurality of display states that can be selected as a function of one of the display control signals (S1, S2) in such a manner as to display the parameter value in the form of a pattern constituted by display elements (12) having the same selected state, and in that the set of display elements (12) includes at least two subsets (31, 32) that are spatially interleaved in the display zone (10) and that are associated with respective ones of the display control signals (S1, S2), the state of each display element (12) of a subset (31, 32) being selected as a function of the display control signal (S1, S2) associated with the subset (31, 32), each subset (31, 32) of display elements (12) being associated with respective activation means (22, 23 & 24 and 25, 26 & 27), the activation means selectively controlling the state of each display element (12) of the subset (31, 32) as a function of the associated display control signal (S1, S2).

2. A device according to claim 1, characterized in that the activation means (22, 23, 24, 25, 26, 27) are connected to decoding means (28, 29) for decoding the display control signals (S1, S2), said decoding means (28, 29) being organized to detect states of the individual display control signals (S1, S2) which are incompatible with the device displaying a value.

3. A device according to claim 2, characterized in that the activation means (22, 23 & 24 and 25, 26 & 27) associated with each subset (31, 32) of display elements (12) are connected to respective decoding means (28, 29).

4. A device according to claim 2 or 3, characterized in that it includes at least one fault display element (14, 15, 16, 17, 18, 19, 20, 21) disposed in the display zone (10) and having a warning state that is selected when the decoding means (28, 29) have detected an incompatible state of a display control signal (S1, S2).

5. A device according to claim 4, characterized in that it includes at least one fault display element (15, 16, 18 & 20, and 14, 17, 19 & 21) associated with each display control signal (S1, S2), the warning state for said element being selected by activation means associated with said display control signal (S1, S2).

6. A device according to claim 4 or 5, characterized in that the display elements (12) are disposed along a line, and in that it includes fault display elements (14, 15, 16, 17, 18, 19, 20, 21) situated at at least one end of said line.

7. A device according to any one of claims 1 to 6, characterized in that the display elements (12) are disposed along a line, and in that each subset (31, 32) of display elements (12) comprises a plurality of groups of adjacent elements, the groups belonging to the different subset (31, 32) being disposed alternately along said line.

8. A device according to claim 7, characterized in that each of said groups has the same number of display elements (12).

9. A device according to claim 8, characterized in that the activation means associated with a subset (31, 32) comprise a plurality of activation circuits (22, 23 & 24 and 25, 26 & 27) each of which controls the states of respective display elements of the subset (31, 32), and in that each group of adjacent display elements of the subset (31, 32) includes at least two elements (12) whose respective states are controlled by different activation circuits.

10. A device according to claim 9, characterized in that two adjacent elements of each of said groups have their respective states controlled by two different activation circuits.

11. A device according to any one of claims 1 to 10, characterized in that the display elements (12) are electro-optical elements.

12. A device according to claim 11, characterized in that the electro-optical elements are constituted by elementary portions (12) of a liquid crystal display and activated independently from one another.

13. A device according to any one of claims 1 to 12, characterized in that said parameter represents the speed of a vehicle (1), in particular a rail vehicle.
